# EUROPEAN PATENT APPLICATION

(11) **EP 0 548 060 A1**
(43) Date of publication of application: **23.06.1993**
(21) Application number: 93200536.6
(22) Date of filing: 12.02.1990
(51) Int. Cl.: B60D 1/52, E04F 21/00, A63B 21/00, F15B 15/22, A47C 21/02, B60G 15/12, F16F 9/08, F16F 9/50

(54) **A practical set of useful tools and apparatuses which are presented for various industrial purposes**

(30) Priority: 10.02.1989 NL 8900326; 08.06.1989 NL 8901462; 21.09.1989 NL 8902360
(62) Divisional of application: 90200316.9
(71) Applicant: Boumans, Johannes Adrianes, NL-3405 XK Benschop (NL)
(72) Inventor: Boumans, Johannes Adrianes, NL-3405 XK Benschop (NL)
(74) Representative: Ferguson, Alexander

(57) **Abstract**

A dismountable draw-hook device (401) for a vehicle, comprising a coupling which contains a first coupling part (402) to be secured to the vehicle for hitching to it a second coupling part (405) connected to the draw-hook (406) which when this is not used is to be detached to stow it away, of which coupling parts (402,405) one is provided with a hitching-head (409) and the other with a recess for receiving the hitching-head (409), and which coupling parts (402,405) are to be locked when the draw-hook (406) is hitched in the hitching position. By a hook-in connection (403,404;406,409) between the coupling parts (402,405) a locking-pawl (410) under the action of at least one locking-spring (411) biases and fixedly retains the hitching-head (409) in its hooked-in position.

## Description

This invention relates to a dismountable draw-hook device for a vehicle, comprising a coupling which contains a first coupling part to be secured to the vehicle for hitching to it a second coupling part connected to the draw-hook which when this is not used is to be detached to stow it away, of which coupling parts one is provided with a hitching-head and the other with a recess for receiving the hitching-head, and which coupling parts are to be locked when the draw-hook is hitched in the hitching position.

Such an apparatus is known from the published Dutch patent application 83 00996.

In this known apparatus said hitching-head and said recess for receiving the hitching-head for their connection are constructed with dovetail edges which, however, do not ensure a perfectly rattle-free connection, and moreover the locking of the coupling parts when the draw-hook is hitched, is performed with a locking-pin, which has the disadvantage not to be loss-free and, accordingly, should be secured with a retaining-pin.

It is intended to make an improvement here and thereto the draw-hook device according to the present invention is characterized by a hook-in connection between the coupling parts, whereby a locking-pawl under the action of at least one locking-spring biases and fixedly retains the hitching-head in its hooked-in position to prevent rattling.

A preferred embodiment of this novel draw-hook device is further characterized in that the detachable draw-hook which is connected to said second coupling part, is provided with the hitching-head whereas the recess for receiving the hitching-head is located in the first coupling part which is connected to the vehicle, and said locking-pawl and locking-spring are rotatably seated on the first coupling part, and the locking-pawl at the location of its pivot is linked to an unlocking-lever serving for unlocking it while the locking-spring presses the hitching-head securely into the pertaining fitting-recess.

The automatic dropping-in of the locking-pawl is therewith ensured in that said fitting-recess has an aperture at its side facing away from the draw-hook, through which aperture a pin on a leaf-spring which for the rest is to be applied flatly onto said side of the fitting-recess, is to be pressed when detaching the draw-hook, said leaf-spring having adjacent its free end an abutment to be projected through the casing wall of said second coupling part, on which abutment the locking-pawl is arrested in its position wherein it is turned-away from the hitching-head, while said pin then presses the hitching-head out of its fitting-recess under the action of said leaf-spring.

The proper action of the draw-hook device is therewith ensured in that
- said abutment has a chamfered top whereby the locking-pawl, while pressing the abutment away against the action of the leaf-spring, can move downwards until the locking-pawl snaps therebehind and is arrested on the abutment under the action of the locking-spring:
- the locking-spring consists of at least one tension spring which is mounted above said fitting-recess on the same pivot as said leaf-spring;
- the pivot of the locking-pawl and the unlocking lever consists of a pivot-rod which is journaled in the casing of the first coupling part whereas the locking-spring is hooked and fixedly secured on a pin adjacent the free end of the locking-pawl;
- said abutment is arrested with its bottom side in a notch in the locking-pawl, which is formed at an appropriate angle;
- the recess in the first coupling part, which is intended to receive the hitching-head of the draw-hook, is constructed in the form of a slotted-in casing with a closed top wall portion behind which the draw-hook is hooked-in with its hitching-head and is pressed and fixed by the locking-pawl.

The great advantage of this embodiment is that the draw-hook with its hitching-head when hooking it in will be readily locked in the fitting-recess when the pin on said leaf-spring and accordingly also the pawl-abutment on this spring is pressed backwards, and the locking-pawl which snaps from its abutment, bangs then against the hitching-head to automatically lock the hitched draw-hook.

This invention further relates to a practical set of useful tools and apparatuses which are presented for various industrial purposes and, apart from said draw hook device, further includes a tool for hanging-up doors, comprising a couple of adjustably interconnected sliding legs which are to be positioned against the door, and against the door-frame, respectively, and on which adjustable measuring-abutments for the hinges are to be clamped in view of positioning the cutting-in templets of a hinge cutting-in machine.

The advantage of this new tool is the simple transfer of the hinge pattern from the door to the door-frame without danger for damages on the door-frame such as often occurs when fixing-on and taking-off cutting jigs.

The preferred embodiment of the herein proposed tool for hanging-up doors is so that the sliding legs are provided with fitting-hooks which are to be positioned against the door, and the door-frame, respectively, and that the sliding legs consist of telescopic tubes, having therebetween a mounting rod on which a spring is arranged which each time returns the sliding legs to their extended position.

Furthermore, preferably a blocking means is provided, locking the sliding legs which are pushed-in against the spring action to their adjusted position on the door, to transfer the location of the hinges of the door to the door-frame, and preferably said measuring-abutments for the hinges in each instance consist of a clamping-piece which is adjustable along a sliding leg and has a clamp screw, and by means of which the templets of the hinge cutting-in machine, when the tool is positioned on the door-frame, can be adjusted in their place, whereto the temlets are preferably in each instance provided with a clamp screw having a clamping-nut and pressing-piece for securing said templets upon their adjustment.

This tool according to the invention can be used in almost all situations for left-turning as well as right-turning doors.

The tool is constructed in a light-weight embodiment and subjected to a treatment whereby rust-forming is prevented as much as possible.

Within the scope of the present invention the new tool can for instance also be of use for windows and besides for adjusting the hinges also for adjusting lock-plates.

Furthermore said practical set of tools and apparatuses comprises a fluid cylinder provided with a piston which, in a manner sealed by at least one piston ring, is reciprocated in the cylinder between the cylinder ends in which fluid chambers are formed, having in each instance a volume capacity which is delimited and defined by the piston when reciprocating, and said cylinder further being provided with fluid conduits for displacing the fluid between the fluid chambers which are formed in the cylinder ends, with valves in the fluid conduits, and with setting means for the valves to controle the rate of fluid displacement.

In a known apparatus of this type the setting means for the valves are contained in the piston at a location which is hardly accessible from outside whereby calibration of their action, once the apparatus is in operation, is not possible.

But this is often desirable, especially when such a fluid cylinder which particularly can be a hydraulic cylinder which is supplied with pressurized oil by an accumulator, would be used as a power cylinder which is build-in in a training apparatus for sporting-purposes, wherein the force to be applied should vary from instance to instance and should be readily adjustable, what cannot be effect with the known fluid cylinder.

It is intended to overcome this problem and to that end, according to the present invention, provision is made for it that the fluid conduits for each time, when the pistion is reciprocating, displacing the fluid between the fluid chambers which are formed in the cylinder ends, are situated in a region outside of the cylinder, and that in this outside region the valves controlling the rate of fluid displacement to each end are arranged, whereby the calibration of said valves and of the rate of displacement is now readily to be effected.

One preferred embodiment of this novel fluid cylinder comprises that the valves are arranged in a piston rod head which is always situated outside of the cylinder, said fluid conduits running from one fluid chamber through a central cavity to the valves in the piston rod head and hence through a cavity which is formed outside of said central cavity in the periphery of the piston rod, back to the other fluid chamber, and preferably an accumulator is adapted to be connected to said piston rod head. Accordingly, the piston rod head contains all control means of the cylinder.

In one form of embodiment the measure is taken that the piston rod is passed through both cylinder ends so that the fluid chambers on each end of the cylinder are symmetrically constructed.

As an alternative furthermore an embodiment is provided wherein the fluid conduits are passed from the piston outwardly to the cylinder wall.

Due to the development of this type of cylinder the force which must be applied to move the piston with rod with respect to the cylinder, can remain the same over the entire stroke length and at the same rate of motion.

Therewith, as stated, also the force which is required to move the two parts, one with respect to the other, can be increased or reduced, and further is also provided the possibility to perform the in- and outgoing motions of the piston with respect to the cylinder with a different force by a different calibration of the valves controlling the rate of fluid displacement.

A further useful aspect aimed at consists of a method for mechanically making-up and stripping beds.

From the published British patent application 2,077,096 a method is known which has this mechanical change of linen as its object, wherein use is made of a frame assembly which lifts or spreads the sheets from and out on the bed, respectively, and furthermore, from US patent specification 3,946,450 an apparatus serving for this purpose is known, wherein a sheet can be rolled out on the bed and be pulled therefrom by means of fixedly mounted rolls.

An important aspect of the present invention is that removing the sheet to be replaced from the bed and applying clean linen thereon each time happens by means of a roll to be advanced on the mattress for winding and unwinding the respective sheets.

The preferred embodiment of this novel method is so that the winding roll is pressed in the mattress into a trough-shaped cavity which, when winding and unwinding the sheets, advances along the bed. This has particularly the great advantage that, when replacing the undersheets on hospital beds, it becomes possible that bedridden patients or aged persons entirely depending on aid and assistance and hardly or only with difficulty capable of moving themselves and thus confronting a very difficult task, do not have to be removed from their bed at all and may remain in bed undisturbed, what is not possible with the use of the abovesaid known apparatuses. The roll cavity is passed through below the bedridden patient and with the rolls the sheets are in each instance wound and unwound and from place to place the old sheet disappears and the new sheet appears and it is not necessary to pull the sheets through under the patient or to lift the patient so that the obtained advantage not only counts for the patient but certainly no less for the nursing personnel. When lifting of heavy patients or heavily wounded patients this having to lift is always a heavy task. The invention brings here relief as the undersheet can now be changed without having to lift, and not even having to displace the patient. The actions which are performed therewith, have very little influence on the patient.

A suitable sheet changing apparatus for performing the herein proposed method is constructed so that to a winding roll which extends across a bed and is pressed into the mattress, on each side of the bed a running-wheel is connected, running on each side under a longitudinal girder of the bed, and in the preferred embodiment, that to a pair of said winding and unwinding rolls at least a pair of said running-wheels is connected, each running under a longitudinal girder of the bed, whereby a stable position is given to the entire roll assembly. Therewith preferably provisions are made that for positively driving the roll unit a driving pinion which is connected on each side of the bed to it, is in engagement with a rack arranged on the longitudinal girder which is present there, and that the one or more winding rolls are spring-biased in the sense of rolling-on and -off, respectively, a sheet by built-in or built-on tensioning springs.

Further advantageous aspects therewith, in combination or per se, are that the roll unit is received in a trough-shaped bin which is rollable as a trolley along the mattress in a pressed-in state therein; that said rol bin is subdivided in two compartments for the dirty, and the clean sheet roll, respectively, with a partition therebetween; that between the sheet rolls, particularly on said partition, furthermore a carrier roll is mounted for the comfort of the patient when passing the roll unit through under him or her; that the roll bin is provided under the winding rolls with a trough-shaped lying-roll mat which will rest on the mattress and rolls on it; and that before and behind the roll bin an upper pair of clamping-rolls is arranged in order to clamp the longitudinal girder of the bed in between these clamping-rolls and said running-wheels for positively maintaining the desired pressed-in state of the winding rolls with their advance. With the here intended roll assembly thereby an inflatable underlay-sheet may be furnished, functioning in the manner of an air bed.

The set of tools and apparatuses, as provided by the present invention, also comprises a spring system with built-in shock absorber, consisting of a gas spring to be mounted between parts which are displaceable, one with respect to the other, and as a shock absorber at least one hydraulic cylinder provided with a gas-actuated auxiliary cylinder, whereby the power of the hydraulic cylinder is to be controlled.

The purpose of the invention is to build-in a shock absorber tuning the cushioning forces exerted by it on the load carried by the spring system, i.e. that the cushioning forces which are applied by the shock absorber are adjusted at the rate of the load resting on the spring system and accordingly at the rate of the gas pressure in the spring, and this purpose is according to the invention realized in a very efficient manner by the provisions that the auxiliary cylinder is in direct connection with the gas spring, whereby the auxiliary cylinder automatically regulates the rigidity of the shock absorber in direct dependence on the load which is applied on the spring system.

Due to this automatic adjustment of the cushioning force which is exerted under the occurring load, both the riding comfort and the riding qualities are always optimally warranted.

The preferred embodiment of the herein proposed spring system with built-in shock absorber is so that the gas spring comprises a bellows surrounding the shock absorber, with the cylinder assembly functioning as a straight-alignment.

The invention is described in more detail in the following specification in view of examples of embodiments thereof to which, however, no restrictive meaning should be attached as within the scope of the invention, as a matter of course, variations and modified embodiments thereof are possible.
Figure 1 is a longitudinal sectional view of the two sliding-legs which the herein proposed tool contains, in their assembled relationship;
figures 2A and 2B show the two sliding legs now detached one from the other, in longitudinal and in end view, and to the right in figure 2A is also seen a bottom view of the upper sliding-leg;
figure 3 shows the mounting-rod which maintains the sliding-legs as represented in figure 2, in their assembled relationship as represented in figure 1, considered detached;
figures 4A and 4B show the measuring-abutments for the hinges, which are to be positioned along the tool, in longitudinal view, and in transverse section, respectively;
figures 5A and 5B show adjustable abutments for depth-positioning in the door-frame, and in the door, respectively, viewed from above and from aside;
figure 6 shows a hinge cutting-in jig or templet in front and in lateral view;
figure 7 shows the clamping-nut for the clamp screw of a cutting templet;
figure 8 shows the blocking-strip for maintaining the shortest position of the tool;
figure 9 shows as forming part of the set of apparatuses according to the invention a fluid cylinder in longitudinal section;
figures 10A and 10B furthermore show a winding and unwinding apparatus for a sheet which is provided with rolls, in rolled and unrolled condition, respectively;
figures 11A and 11B schematically show the principle of the method for changing the undersheets of a hospital bed with the winding and unwinding roll according to the invention;
figures 12A and 12B are a lateral, and a top view, respectively, of a preferred embodiment of a roll unit which is pressed into a mattress for performing the proposed method;
figure 13 schematically shows an assembly of a spring system with built-in load-dependent shock absorber;
figures 14a and 14b respresent some embodiments of servo-cylinder ports;
figure 15 is a perspective general view of the herein proposed draw-hook device in assembled state;
figure 16 shows of the two coupling parts the first coupling part comprising the draw-hook with its hitching-head, in lateral view, and the second coupling part consisting of the coupling casing which in view of hooking-up the hitching-head of the draw-hook therein is slotted-in, in central longitudinal view, in the assembled condition;
figures 17, 18 and 19 show the draw-hook detached in lateral view at the location of its hitching-head, and in lateral, in rear, and in top view, respectively, viewed onto the hitching-head;
figures 20-22 show the coupling casing forming the second coupling part, in end view, in top and in lateral view, respectively;
figures 23-26 show mounted on the coupling casing behind the hook-in recess which is intended for the draw-hook, the leaf-spring and connected thereto the pin and abutment the purport and the operation of which will appear in more detail here in the following;
figures 27 and 28 are a lateral view, and an end view, respectively, of the locking-pawl which is mounted for rotation on the coupling casing; and
figures 29, 30 and 31 are representations of the unlocking lever and of its mounting bushing in end view, and considered from aside of the coupling casing, respectively.

In the modern manufacture of doors the hinges are mounted for the half at the same time on the doors. In order to now transfer the location of the hinges from the door to the door-frame, a simple piece of tool is developed, by means of which said operation can be performed.

With this tool a left- as well as a right-turning door can be hung-up. There is also constructed a cutting-jig or templet which can be used for both left- and right-turning doors to transfer the hinge cutting-in pattern to the door frame.

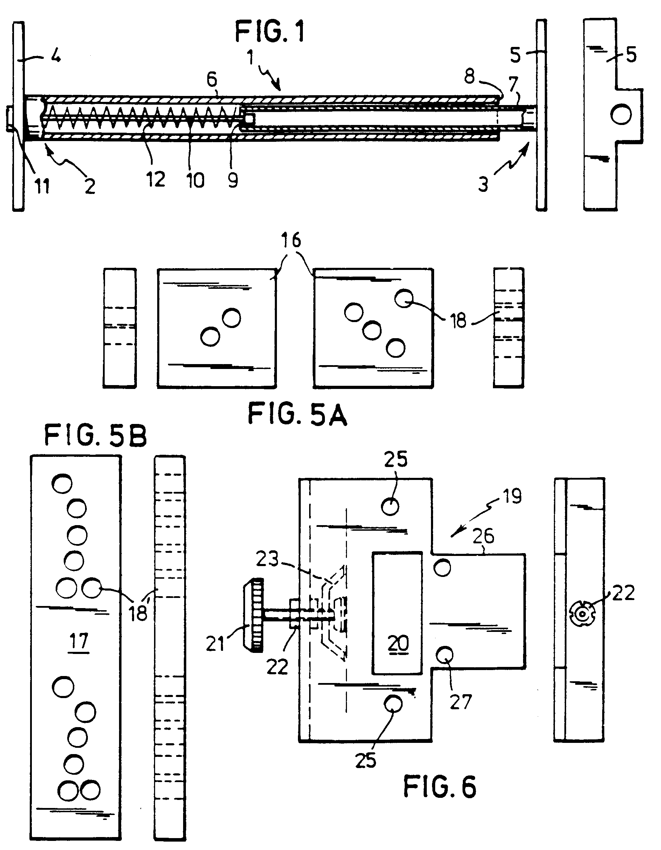

This tool for hanging-up doors - or windows - comprises the slide-assembly 1 as represented in figure 1, which is to be hooked with its sliding-legs 2, 3 on the door to fix thereon the location of the hinges which in the manufacture are mounted on the door, and is then to be hitched onto the door frame in view of transferring the location of the hinges from the door to the door frame.

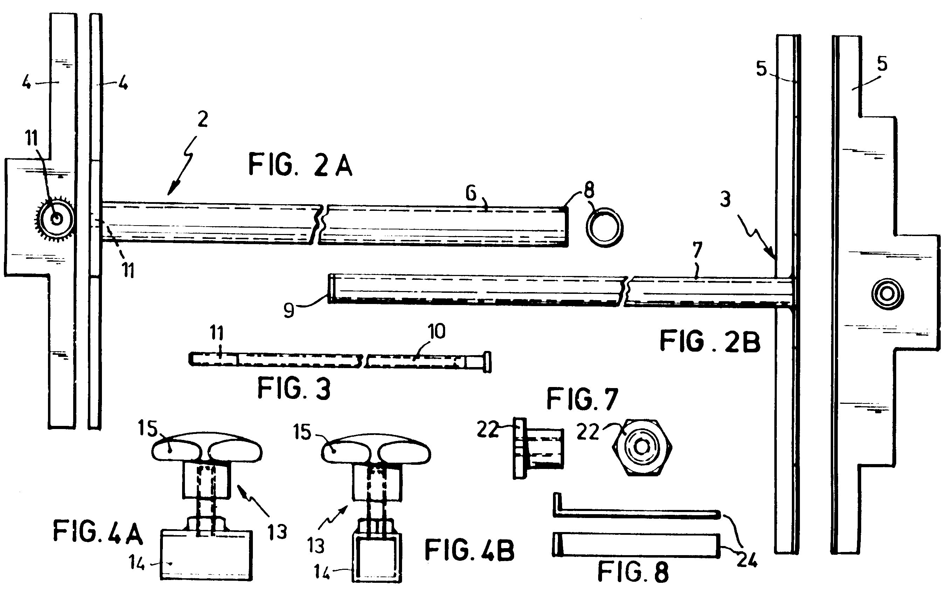

The sliding-legs 2 and 3 which are represented in figure 1 in their assembled relationship, are considered detached in figures 2A and 2B and comprise an upper and a lower fitting-hook 4, and 5, respectively, and guide-legs 6 and 7, respectively, which guide-legs in the embodiment as represented in figures 1 and 2 consist of telescopic tubes. The upper guide-leg 6 has an open end 8 and the therein inserted guide-leg 7 has an end covered by a ring-disc 9, in which ring-disc 9 the mounting-rod 10 as represented in figures 1 and figure 3, is seated, which keeps the sliding-legs 2 and 3 in their assembled relationship as represented in figure 1. The rod is screw-threaded in the fitting-hook 4 at 10 and as seen in figure 1 the slide-adjustment happens under the action of a spring 12 which is seated and tensioned about the mounting-rod 10.

Figures 4A and 4B show a measuring-abutment 13 for the hinges, which as represented consist of a clamping-piece 14 and a clamp screw 15.

Figures 5A and 5B illustrate adjustable abutments 16 and 17 having hole-patterns 18 and 18', respectively, provided therein for the depth-positioning in the door frame and in the door.

The cutting-in pattern jig, indicated at 19 in figure 6, in the hinges is as seen provided with a cutting-in aperture 20 of a clamp screw 21 which is threaded in the clamping-nut 22 which is further represented in figure 7, and by which the pressing-piece 23 is pressed and fixed onto the door frame.

The use of the tool in the door and in the door frame is further described in the hereafter following part of the specification.

With the pressed-in and blocked tool 1 by means of the blocking strip 24 the hinges which are already mounted on the doors are measured.

The tool 1 is hooked with the fitting-hook 4 on the upper side of the door. The measuring-abutments 13 which are already slid on the sliding-leg 2, are now pressed against the upper side of the hinges and fixed one by one on the sliding-leg 2 by means of the clamp screw 21.

Thereby the correct height and spacing is determined of the cutting pattern which is to be arranged in the door frame.

The tool 1 is now removed from the door, the blocking strip 24 is disengaged and the tool 1 can now be hitched into the door frame. This happens by means of the compression spring 12.

Stands the tool 1 now clamped-in between the lintel and threshold then can be started with arranging the cutting-pattern in the door frame.

This is done in the following manner.
On the templet 19 the abutments 16 are positioned with the hole-pattern 25 at the correct depth and thereafter the templet is pressed with the abutment 26 against the lower side of the measuring-abutments 13 and by means of the clamp screw 21 the templet is fixedly clamped in the door frame.

After this operation, with the aid of a head cutter, the hinge pattern is transferred by means of the pattern 20 which is arranged in the templet 19, into the door frame.

With this tool both left- and right-turning doors can be hung-up. The tool 1 has on each side a fitting-hook; one side is for the right and the other side is for the left.

When the measuring-abutments 13 are fixed on a round guide-leg as seen in the end view to the right in figure 2A, said measuring-abutments can be turned 180 degrees so that also the measuring-abutments can be used to the left as well as to the right.

In order to now arrange the hinge pattern in a door, the adjustable abutment 17 is arranged in the templet 19 on the hole-pattern 27 for the depth-positioning in the door.

Now one can, by clamping the templet on the door, and self determining the correct position of the hinge pattern, by means of an end cutter apply the hinge pattern on the door for the two or more hinges.

Are now the hinge patterns applied on the door then, as described hereabove, with the aid of the tool 1 the hinge patterns can be transferred to the door frame.

Finally it is observed that the here represented embodiments of the new tool for hanging-up doors are as a matter of course only meant by way of example and that within the scope of the invention of course modifications and variations are conceivable.

### List of reference numerals

- 1.: assembled tool
- 2.: upper sliding-leg
- 3.: lower sliding-leg
- 4.: upper fitting-hook
- 5.: lower fitting-hook
- 6.: outer guide-leg
- 7.: inner guide-leg
- 8.: telescopic tubes
- 9.: ring-disc
- 10.: mounting-rod
- 11.: fixing-screw for mounting-rod
- 12.: compression-spring
- 13.: measuring-abutments for hinges
- 14.: clamping-piece
- 15.: clamp screw
- 16.: adjustable abutment for depth-positioning in the door frame
- 17.: adjustable abutment for depth-positioning in the door
- 18.: hole-pattern for abutment 16
- 18'.: hole-pattern for abutment 17
- 19.: cutting-in templet
- 20.: hole for the cutting-pattern for the templet in the door or the door frame.
- 21.: clamp screw for hitching-in the templet in the door or the door frame.
- 22.: clamping-nut
- 23.: pressing-piece
- 24.: blocking-strip for keeping the tool assembled in the shortest position in connection with the measuring of the hinges in the door
- 25.: hole-pattern for the abutment 16
- 26.: abutment of the templet against the lower side of the measuring-abutments
- 27.: hole-pattern for the abutment 17

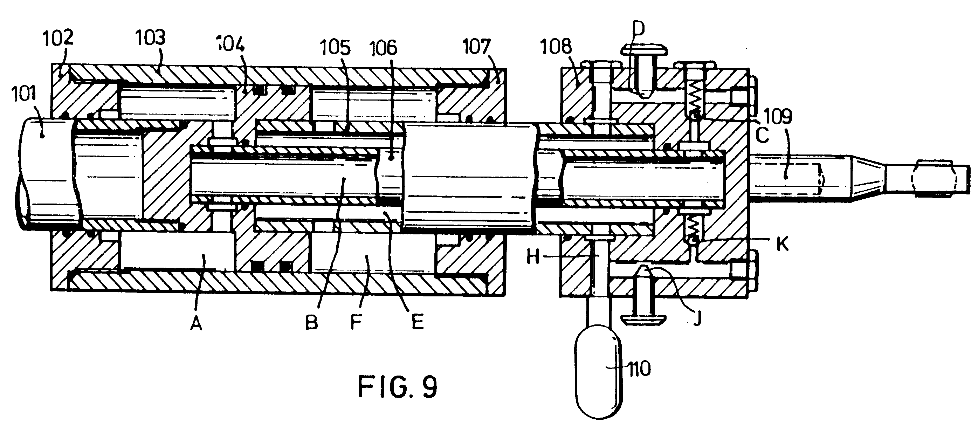

Of the fluid cylinder in figure 9 piecemeal the following members are indicated: the piston rod 101, the end piece 102, the cylinder 103, the piston 104, the piston rod 105, the inner lining 106, the end piece 107, the piston rod head or the valve block 108, the connecting end 109 of the piston rod 105, and the accumulator 110.

The operation of the cylinder is as follows:
When the cylinder is moved relatively with respect to the piston and piston rod to the right, the liquid which is present in chamber A will be thrusted to chamber F. Therewith the following takes place, however: the liquid flows from chamber A via conduit B through check valve C and via the adjustable passage opening D through conduit E in chamber F.

Is the cylinder moved to the left, then the liquid which is present in chamber F, will be thrusted to chamber A. Therewith the following happens: the liquid is thrusted via conduit E and H through the adjustable passage J and the check valve K via conduit B in chamber A.

If follows therefrom that if the adjustable passage is made longer or smaller, there will more or less force be required to displace the cylinder with respect to the piston. Are the adjustable passages unequally positioned then it will appear that the force which is required to move the piston with respect to the cylinder, is different as the rate of the regulation of the adjustable passages.

The accumulator is provided to have a constant pressure on each side of the piston. This pressure also provides for a proper sealing of the gaskets. The accumulator also attends to it that with temperature changes the liquid which is contained in a closed circuit, can expand.

The advantages of this type of cylinder are:
1. All conduit passages for the fluid or in a given instance the liquid are built-in.
2. The adjustable passages are located at a readily accessible place.
3. The outer cylinder is adapted to be built-in in various apparatuses with the valve block at a well accessible location.
4. On the cylinder handles and also a carrier can be built-on.

The construction of the type of cylinder with inner passages according to said first preferred embodiment is selected for the following reasons:
1. Structually this construction is more efficient.
2. Displacement of the fluid from one chamber to the other does not have to take place outside about the cylinder housing.
3. The type of cylinder having a piston rod projecting on each side has as an advantage that both surfaces of the piston are equal.
4. The liquid which is displaced from one chamber to the other is always equal.
5. With this system there is no storage tank for the liquid required.
6. By using the liquid passage in one of the piston rods all controls can be arranged in a valve block and this be mounted on the end of the piston rod.
7. The cylinder housing can serve as a handle or as a carrier and is to be hingedly secured in a frame.
8. This type of cylinder is to be constructed in a small embodiment as this has no influence on the functioning.
9. The adjusting possibilities are at a well accessible location.
10. In cylinders which have to be used with very small forces the gasket which is mounted on the piston may be omitted; due to this there is less resistance of gaskets.
11. The built-in accumulator or possible pressure chamber in the valve block provides for it that there is on both sides of the piston a constant pressure present which is necessary for this type of sealing.
12. The accumulator also serves as an expansion vessel with temperature changes.

The possibilities and uses of the herein proposed novel fluid cylinder are to be summarized as follows:
1. In- and outgoing stroke to be controlled with equal force.
2. In- and outgoing stroke to be controlled with unequal force.
3. Possibility to construct on the cylinder housing an attachment for building-in in training devices.
4. Possibility to construct on the cylinder housing a handle for direct motion eventually without transferring means.
5. Pressure gauges are to be built-on for reading the applied force.
6. Cylinder having gaskets on the piston to block the unit in predetermined positions.
7. By adjusting the calibration valves the various motions can be absorbed more or less.

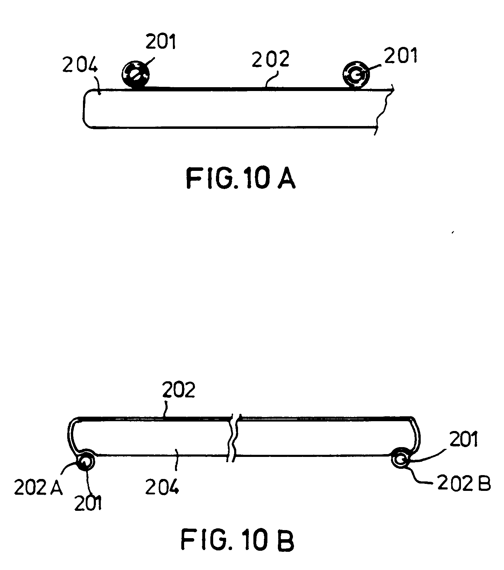

Figures 10A and 10B show in the therein illustrated rolling-up and rolling-off device a sheet 202 which is provided with rolls 201, rolled-up and rolled-off, respectively, and tucked about a mattress 204. The rolls 201 are, as respresented, received in hem-turnings 202A and 202B.

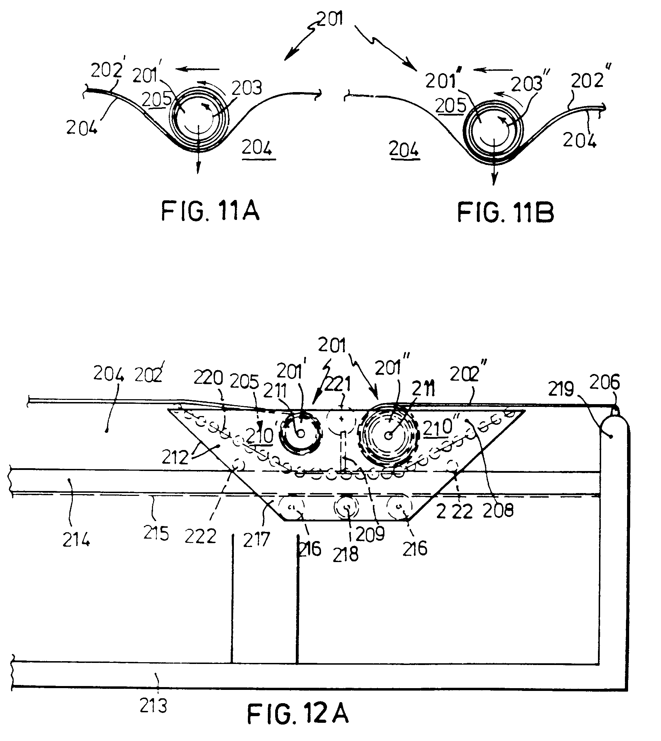

Figures 11A and 11B show the principle of the intended method and apparatus for rolling-up and rolling-off a sheet by means of a winding roll 201 which in figure 11A is represented as a winding-on roll 201' and in figure 11B as an unwinding roll 201'', and which winds on, and unwinds, respectively, the undersheet indicated at 202 considered in figure 10 each time counterclockwise.

The rolls 201 are, as schematically indicated in figure 10 by therein respresented arched arrows 203' and 203'', in each instance spring-biased by built-in or built-on tension springs for a more positive acutation of the rolling-up and rolling-off than by winding it in the correct sense only.

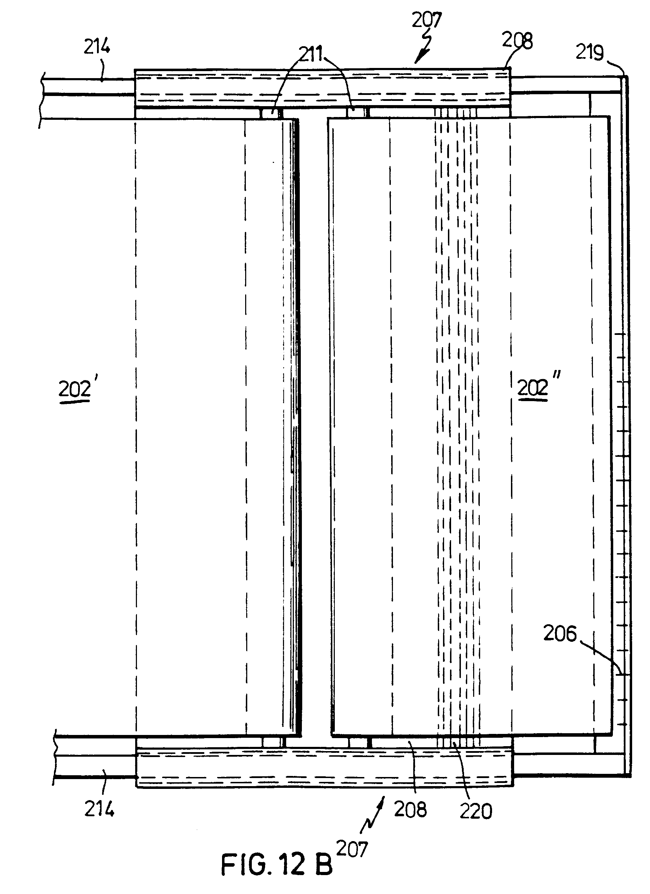

The roll 201 is in each instance pressed into a mattress 204 by pressing it down by a force or a weight acting thereon while forming a trough-shaped pocket 205 in the mattress 204, which when winding, and unwinding, respectively, runs-on in the sense of rolling-up, and rolling-off, respectively. The sheet 202 is thereby maintained tautly stretched by attaching it at the pertaining bed end as schematically represented at 6 in figures 12A and 12B in which by way of example one preferred embodiment of a roll unit 207 is represented, by which the intended method can be performed.

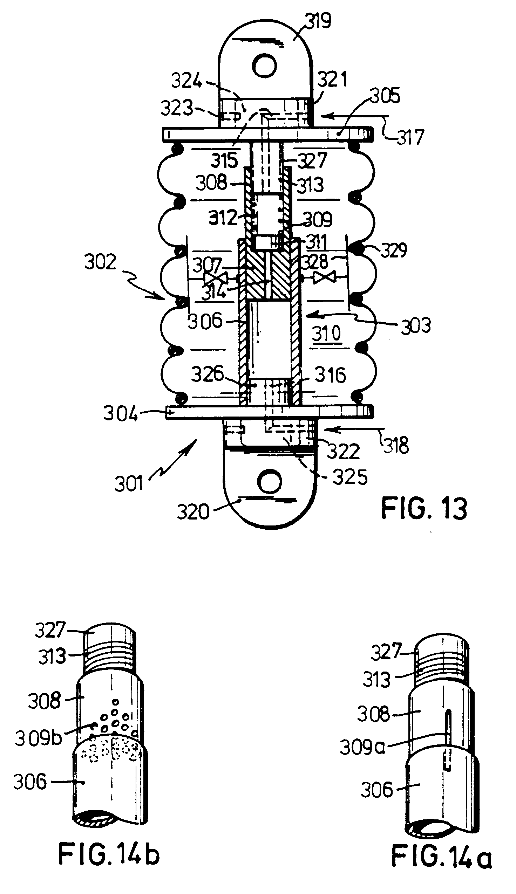

The roll unit 207 comprises a bin 208 which is rollable as a trolley along the mattress 204 in a pressed-in condition therein as seen in figure 13B, and in the bin 208 winding-on and unwinding rolls 201' and 201'' are received and the bin 208 is, in order to keep the dirty sheet 202' well separated from the clean sheet 202'', subdivided by a half-high partition 209 in two roll compartments 210' and 210'' in which the rolls 201' and 201'' are to be journaled on stub shafts 211 in the bin walls 212. This can happen in a suitable manner by a snap-in connection.

It is otherwise also very well possible to advance winding-on and unwinding rolls 201' and 201'' in paired relationship whereby between the trough-shaped pockets 205 formed by said rolls, an upward undulation forms itself which fulfils the same task as the half-high partition wall 209 in figure 12A, what is not represented in more detail in the drawings, however, as this will readily be clear.

The roll system 207 as represented in figures 12A and 12B operates as follows:
There is constructed a bed 213 which preferably has somewhat heavier longitudinal girders 214 than in a usual bed. Under said longitudinal girders 214 along the entire length there are arranged racks 215. Said racks 215 serve for adaptation to displace a roll bin 208 contained by the roll unit 207, which is pressed across the width of the bed 213 into the mattress 204, under tension.

The roll-bin 208 is mounted by means of running-wheels 216 and brackets 217 under the longitudinal girders 214. There is also on each side of the bed 213 a driving pinion 218 jounaled in the brackets 217, which are engaged in the rack 215. The roll bin 208 is pressed by this structure constantly 60 to 70 mm into the mattress 204. This is necessary to make room for the operations which are required to change the undersheet 202 between the patient and the mattress 204.

In the roll-bin 208 winding and unwinding rolls 201', and 201'', respectively, are journaled. Rolling-up and rolling-off said two winding rolls 201' and 201'' can positively be controlled by means of in each instance a built-in or built-on pretensioned spring therein which is, however, not specifically represented in the drawings as said spring-biased action of winding and unwinding rolls will be readily clear.

With said rolls 201' and 201'' each time an undersheet 202 is rolled-up and rolled-off. One end of the dirty sheet 202' is fixed to the roll 201' and its other end is secured to a foot-end (not shown) of the bed 213.

On the roll 201'' a clean undersheet 202'' is rolled-up and this is secured with its other end as shown at 206 to the head-end 219 of the bed 213.

Is the roll-bin 208 now located as the head-end 219, then the clean undersheet 202'' of the roll 201'' is thus rolled-up entirely and the dirty undersheet 202' of the roll 201' still rolled-off up to the foot-end where it is clamped.

As the two rolls 201' and 201'' are hitched-in under the spring-load in the sense of the arrows 203' and 203'', both undersheets 202' and 202'' will lie tautly stretched on and over the mattress 204.

When there is situated a patient on the bed 213 and the roll-bin 208 is displaced by means of the conveyor pinion 218 which is engaged in the rack 215, in the direction of the foot-end, then the roll 201' with the still rolled-off sheet 202' will roll-up itself under the back of the patient and the roll 201'' can then, against its own spring-tension, be rolled-off under the patient.

Because there is room available as the roll-bin 208 is pressed into the mattress, rolling-off and rolling-up can take place with the least possible pressure on the patient.

After this operation the sheet 202' to be changed can be drawn from the roll 201' and the roll 201' be blocked at the end, the sheet 202' to be changed be taken from the roll 201' and a new clean sheet 202'' be fixed thereon. Thereafter the blocking of the roll 201' now 201'' is disengaged and the sheet 202'' can be wound on the roll 201''. The roll can stand under a built-in spring-tension.

The bed 213 is now ready for the next operation whereby the same actions will thus take place but then in reverse order with the roll 201''.

Also then the undersheet 202' to be changed is again replaced with the patient experiencing no hinder therefrom.

The most important aspect thereof is that the sheet 202' or 202'' does not slide with respect to the body of the patient and the mattress 204 but rolls on and off. The necessary motions which have to take place, are laid in the roll-bin 208 which is maintained pressed-in into the mattress 204.

With this system there are more possibilities of embodiment yet, to remove a sheet between a mattress and a bedridden patient with the patient experiencing no hinder therefrom.

Thus the roll-bin 208 is to be provided, under the winding rolls 201' and 201'', with the lying-roll mat 220 as respresented in figures 12A, which will rest on the mattress 204 and rolls on it. Furthermore, between the winding-rolls 201' and 201'', preferably on the partition roll 209, for the comfort a lying-roll 221 can yet be supplied as shown dotted in figure 12A, and the roll-bin 208 can afore and behind be provided with a couple of clamping-rolls 222 to retain the roll-unit 207 with the longitudinal girders 214 seated and clamped-in between said clamping-rolls 222 and the running-wheels 216 though, as a matter of course, well rollable.

Furthermore, with the bed sheet 202 as represented in figures 10A and 10B, also spring-loaded rolls 201', 201'' can be arranged in the hem-turnings 202A, 202B whereby this sheet 202 is adapted to automatically roll-off and spread-out tautly stretched on the mattress 204 under the spring-tension force. Such bed sheets 202 which are provided with winding-rolls 201 are thereby to be provided with tucking-flaps lying beside the rolls 201, which are received in the hem-turnings 202A, 202B, and adapted to be tucked under the mattress 204. This making-up manner is particularly handy for, as an example, changing hospital beds and hotel beds in great numbers, and also an inflatable underlaycloth can be supplied with the herein represented roll-up and roll-off device.

The assembly 301 as represented in figure 13 comprises a spring system 302 with at least one built-in shock absorber 303.

The spring system 302 as represented consists of an air bellows which is hitched-in between end plates 304 and 305.

Between the end plates 304 and 305 is also arranged the shock absorber 303 which is constructed as a hydraulic cylinder 306 with the piston 307 therein, and provided with the servo-cylinder 308 which is connected to the piston 307 as represented and actuated by a gas such as air, and is, via a port 309, in open communication with the spring space 310 in the bellows 302 whereby the gas pressure in the spring 302 also constantly prevails in the servo-cylinder 308.

The force on the servo-cylinder 311 which, as shown, is to be biased by a spring 312, the spring force of which is to be regulated by screw means 313, under control of the damping characteristic, onto a throttle-opening 314, is thus directly dependent on the spring pressure.

At 315 and 316 the necessary gas and oil conduits are represented and at 317 and 318 gas and oil supply openings.

The substantially flatly constructed hitching-heads 319 and 320 are connected to hitching-sockets, preferably hitching-rings (although also a square embodiment thereof is conceivable), 321 and 322 which are to be secured by bolts, as schematically indicated at 323, to the connecting stubs 324 and 325 on the end plates 304 and 305.

At 326 and 327 mounting stubs for the cylinders 306 and 308 are shown.

As seen in figure 14a, one or more elongated parts 309a in the auxiliary cylinder 308, which with the damping are gradually closed, can provide a sharply progressive damping characteristic. In figure 14b a series of perforations 309b is represented instead of the ports 309a as represented in figures 14A, but also a perforated cylinder tube 308 can be used, which shows a suitably ordered hole-pattern.

The herein represented embodiment is, as a matter of course, only intended as an example which is not to be interpreted in a restrictive sense as, within the scope of this invention, modifications and variations thereof are conceivable.

As seen in figure 13, on the shock absorber cylinder 306 an openwork anti-buckling guide 328 for the spring-bellows 302 is seated. The bellows is furthermore adapted by reinforcing rings 329 to a high load.

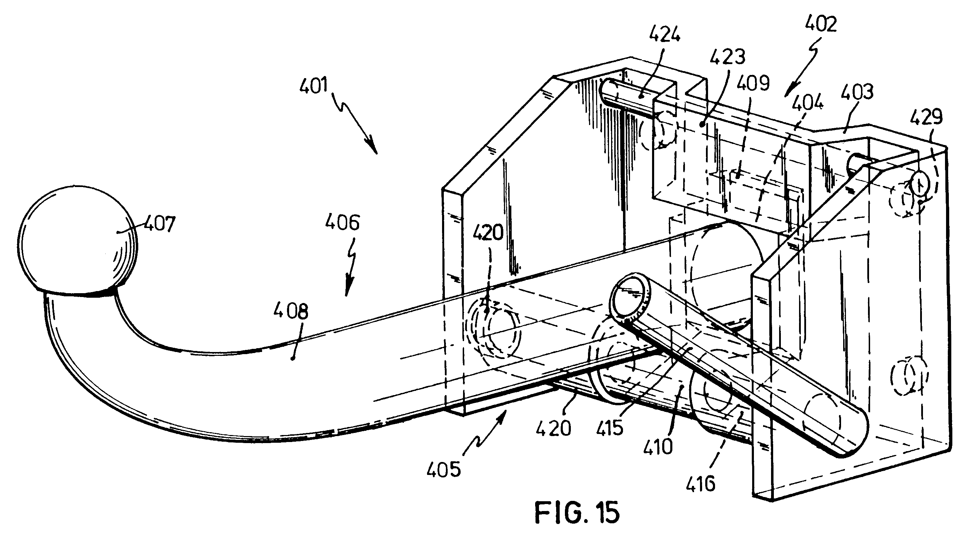

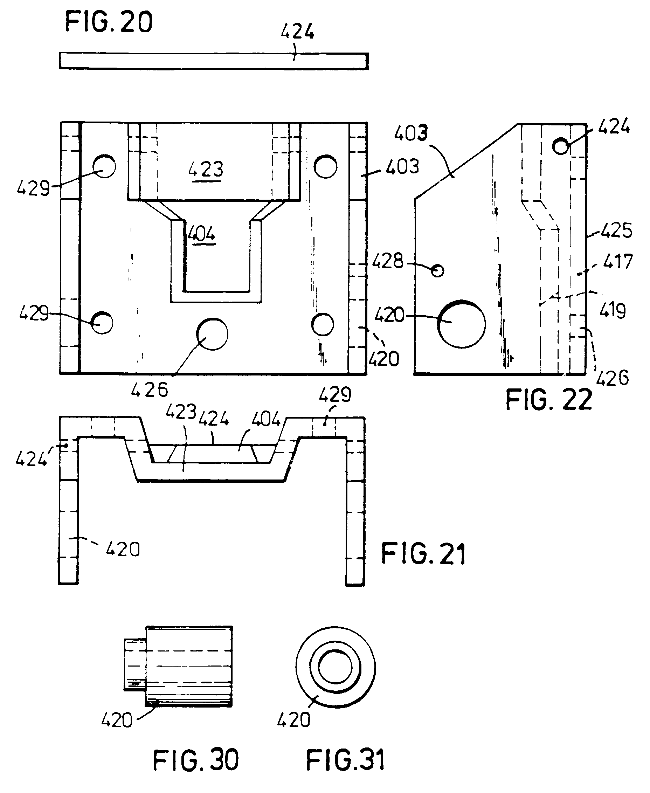

The draw-hook device 401 as represented in figures 15-31 comprises the first coupling part 402, to be secured to the vehicle (not shown), in the form of a coupling casing 403 having a fitting-recess 404 formed therein for hooking-in the second coupling part 405 therein, comprising the draw-hook 406 with this coupling-ball 407, coupling-rod 408, and hitching-head 409, and being detachable in order to be stowed away and forming no obstacles, out of use, which would project behind the vehicle.

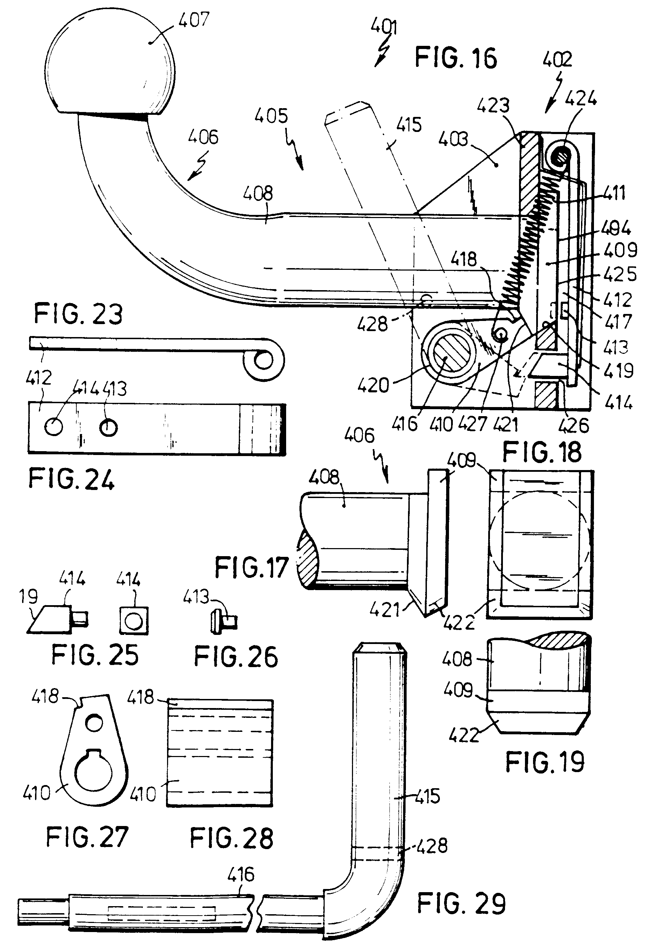

In figures 15 and 16 the draw-hook 406 is shown in its each time hooked-in position with its hitching-head 409 in the fitting-recess 404 of the coupling-casing 403, in which this will be locked due to the locking-pawl 410 which is rotatably mounted on the coupling casing 403, and thereto stands under the action of tension springs 411 which are furthermore arranged on the coupling casing 403, and press the locking-pawl 410 onto the hooked-in hitching-head 409, what is fully automatically effected as the hitching-head 409, when hooking-in, presses a pin 413 which is connected to a leaf-spring 412 also mounted on the coupling casing, behind the fitting-recess 404, rearwardly while also pressing the locking-pawl 410 away from the abutment 414 which is arranged adjacent the free end of the leaf-spring 412, whereby the pawl 410 snaps-off from the abutment 414 and strikes on the hitching-head 410 while fixedly locking the hooked-in draw-hook 406. In figure 16 the locking-pawl 413 and its abutment 414 and also the pin 413 are shown with full lines in the locking position and with dot-dash-lines in the arrested position.

The unlocking lever 415 which is seated on the turning-rod 416 that is mounted in the coupling casing 403, is adapted to turn the locking-pawl 410 away from the hitching-head 409 to under the abutment 414. The hitching-head is then pressed by the pin 413 under the action of the leaf-spring 412 out of the fitting-recess 404 while extending the abutment 414 which projects through an aperture 417 in the coupling casing 403, where the locking-pawl 410 then with a therein formed notch 418 with its top as represented will snugly fitting be seated. The abutment 414, as seen, has at the top a chamfer 19 adapted to press it away by the locking-pawl 410 and allow it to pass.

The lever 415 and its bearing-points and bearing-bushing 420 are illustrated in more detail in figures 15, 16, 20, 21, 22, 24, 30 and 31 and the shape of the hitching-head 409 of the draw-hook 406 and of the fitting-recess 404 which is formed in the coupling casing 403, clearly appear from figures 15-20.

The hitching-head 405 has a chamfer 421 adapted for coöperation with the locking-pawl 410 and a chamfer 422 adapted in view of its easily hooking-in as appears from figures 17, 18 and 19. The fitting-recess or hooking-in pocket 404 has the shape as clearly represented in figures 20 and 21 with at the top the closed hook-tight edge 423 of said pocket 404.

The pivot formed by the turning-rod 424 as represented commenly pertains to both the tension springs 411 and the leaf-spring 412, the latter, as clearly seen in figure 16, lying flat onto the backside 425 of the fitting-recess 404 to be pressed, with the pin 413 which is arranged thereon, through an aperture in and out of said recess 404. At 426 the aperture in the coupling casing 403 is indicated, through which the abutment 414 is passed, which is secured on the leaf-spring 412.

The securing-point of the tension spring 411 on the locking-pin 410 as indicated at 427 and at 428 a retaining-pin for fixation of the lever 415 is indicated.

Further details of the new draw-hook device appear from the drawing, and it is again observed, however, that no restrictive meaning should be attached thereto.

The important aspects are that the removability of the draw-hook should at all times be well performable, and when the draw-hook is left seated in mounted condition for an extended time, it will not get stuck, or corroded fast, due to rust or sand or dust or other elements. The aim is that no parts may be welded, that most parts are forged in one piece, and that all pivotal parts are manufactured from plastic or are lined with teflon.

The construction of the draw-hook is therewith such that the draw-hook both on the ball-head side and on the locking-head side is forged in one piece. The frame is stamped or forged in one piece. Bushings or pivots are manufactured from plastic or lined therewith. Tension springs and leaf-springs are made of rust-free steel. All steel parts are where necessary treated for rust-resistance.

The integrally pressed frame of the coupling-part 402 is secured by four steel bolts to the vehicle. The bolt-holes in the coupling-casing 403 are indicated at 429 in figures 15, 20, 21 and 22. In said casing the locking means 410 with the shaft 416 and the springs 411 and 412 and the lever 415 with plastic bushings 420 are mounted. When the lever 415 as seen in figure 16 is moved to the right, of the locking means 410 then the notch or lug 418 will be arrested on the abutment 414 whereby the lever 415 will remain in this position.

Is the draw-hook 406 now hooked in a sloped position in the seat 404 of the frame 403 and the ball-head 407 of the draw-hook 406 pressed down, then the small pin 413 on the leaf-spring 412 will come in contact with the backside of the hitching-head 409 of the draw-hook 406. Thereby the abutment at the bottom of the leaf-spring 412 is pressed away from the locking-pawl 410 and the tension springs 411 will make the lever 415, as viewed in the drawing, move automatically to the left whereby the locking-pawl 410 will press and fix itself under against the sloped side of the hitching-head 409 so that a positively clearance-free connection of the draw-hook 406 with the frame 403 is brought about.

### List of reference numerals

- 401.: draw-hook device
- 402.: first coupling part
- 403.: coupling casing
- 404.: fitting-recess
- 405.: second coupling part
- 406.: draw-hook
- 407.: coupling-ball
- 408.: coupling-rod
- 409.: hitching-head
- 410.: locking-pawl
- 411.: locking-spring
- 412.: leaf-spring
- 413.: pin on leaf-spring
- 414.: abutment on leaf-spring
- 415.: unlocking lever
- 416.: pivot shaft of locking-pawl and of unlocking lever
- 417.: aperture in backside fitting-recess
- 418.: notch in locking-pawl
- 419.: chamfer top abutment
- 420.: bearing bushings
- 421.: chamfer hitching-head
- 422.: chamfer locking-head
- 423.: closed retaining edge of fitting-recess
- 424.: turning-rod
- 425.: backside fitting-recess
- 426.: aperture in backside coupling casing
- 427.: securing-point tension spring on locking pawl
- 428.: retaining-pin of lever
- 429.: bolt-holes

## Claims

1. A dismountable draw-hook device for a vehicle, comprising a coupling which contains a first coupling part to be secured to the vehicle for hitching to it a second coupling part connected to the draw-hook which when this is not used is to be detached to stow it away, of which coupling parts one is provided with a hitching-head and the other with a recess for receiving the hitching-head, and which coupling parts are to be locked when the draw-hook is hitched in the hitching position, **characterized** by a hook-in connection (403, 404; 406,409) between the coupling parts (402, 405), whereby a locking-pawl (410) under the action of at least one locking-spring (411) biases and fixedly retains the hitching-head (409) in its hooked-in position.

2. A device according to claim 1, **characterized in that** the detachable draw-hook (406) which is connected to said second coupling part (405), is provided with the hitching-head (409) whereas the recess (404) for receiving the hitching-head is located in the first coupling part (402) which is connected to the vehicle.

3. A device according to claim 2, **characterized in that** said locking-pawl (410) and locking-spring (411) are rotatably seated on the first coupling part (402).

4. A device according to claim 3, **characterized in that** the locking-pawl (410) at the location of its pivot (416) is linked to an unlocking-lever (415) serving for unlocking it.

5. A device according to any one of the previous claims, **characterized in that** the locking-spring (411) presses the hitching-head (409) securely into the pertaining fitting-recess (404).

6. A device according to any one of the previous claims, **characterized in that** said fitting-recess (404) has an aperture at its side (425) facing away from the draw-hook (406), through which aperture a pin (413) on a leaf-spring (412) which for the rest is to be applied flatly onto said side of the fitting-recess, is to be pressed when detaching the draw-hook (406), said leaf-spring having adjacent its free end an abutment (414) to be projected through the casing wall (403) of said second coupling part (402), on which abutment the locking-pawl (41) is arrested in its position wherein it is turned away from the hitching-head (409), while said pin then presses the hitching-head out of its fitting-recess, said abutment (414) preferably having a chamfered top (419) so that the locking-pawl (41), while pressing the abutment away against the action of the leaf-spring (412), can move downwards until the locking-pawl snaps therebehind and is arrested on the abutment under the action of the locking-spring (411).

7. A device according to any one of the previous claims, **characterized in that** the locking-spring (411) consists of at least one tension spring which is mounted above said fitting-recess (404) on the same pivot as said leaf-spring (412), the locking-spring (411) being preferably hooked and fixedly seated on a pin (426) adjacent the free end of the locking-pawl (410).

8. A device according to any one of the previous claims, **characterized in that** the pivot (416) of the locking-pawl (410) and the unlocking lever (415) consists of a pivot-rod which is journaled in the casing (403) of the first coupling part (402).

9. A device according to any one of the previous claims, **characterized in that** said abutment (414) is arrested with its bottom side in a notch (418) in the locking-pawl (410), which is formed at an appropriate angle.

10. A device according to any one of the previous claims, **characterized in that** the recess (404) in the first coupling part (402), which is intended to receive the hitching-head (409) of the draw-hook (406), is constructed in the form of a slotted-in casing (403) with a closed top wall portion (423) behind which the draw-hook is hooked-in with its hitching-head and is pressed and fixed by the locking-pawl (410).
